# EUROPEAN PATENT APPLICATION

(11) **EP 4 458 755 A1**
(43) Date of publication of application: **06.11.2024**
(21) Application number: 22914580.0
(22) Date of filing: 23.12.2022
(51) Int. Cl.: B67B 7/15, B65G 47/88, B65G 43/00, G01N 35/00

(54) **ONLINE UNCAPPING SYSTEM**

(30) Priority: 29.12.2021 CN 202111634862; 29.12.2021 CN 202123364849 U
(71) Applicant: Autobio Labtec Instruments Co., Ltd., Zhengzhou, Henan 450016 (CN)
(72) Inventor: ZHAO, Peng, Zhengzhou, Henan 450016 (CN); XU, Can, Zhengzhou, Henan 450016 (CN); ZANG, Xingsen, Zhengzhou, Henan 450016 (CN); CHEN, Kewei, Zhengzhou, Henan 450016 (CN); JIANG, Zongpin, Zhengzhou, Henan 450016 (CN); WU, Baojun, Zhengzhou, Henan 450016 (CN); ZHU, Zhiguang, Zhengzhou, Henan 450016 (CN); HOU, Jianping, Zhengzhou, Henan 450016 (CN); WANG, Chao, Zhengzhou, Henan 450016 (CN); LIU, Cong, Zhengzhou, Henan 450016 (CN)
(74) Representative: V.O.
(86) International application number: PCT/CN2022/141643
(87) International publication number: WO 2023/125326

(57) **Abstract**

An online uncapping system, comprising a sample intake rail (1100), a scanning blocking mechanism (300), a sample container information scanning apparatus, an uncapping blocking mechanism (700), a sample tube clamping mechanism (800), a sample tube uncapping device (900), and a cap receiving mechanism (1000). The scanning blocking mechanism is arranged on one side of the sample intake rail and configured to block and release a sample tube; the sample container information scanning apparatus is configured to read information about the sample tube blocked by the scanning blocking mechanism; the uncapping blocking mechanism is arranged on one side of the sample inlet rail and configured to block and release the sample tube; the sample tube clamping mechanism is configured to clamp the sample tube blocked by the uncapping blocking mechanism; the sample tube uncapping device is configured to uncover the sample tube blocked by the uncapping blocking mechanism, such that a tube body of the sample tube is separated from a tube cap, and the sample tube uncapping device is provided with a clamping jaw for clamping the tube cap; and the cap receiving mechanism is configured to collect the tube cap. The online uncapping system improves the online uncapping work efficiency.

## Description

The present application claims the priority to Chinese Patent Application No. 202111634862.6, titled "ONLINE UNCAPPING SYSTEM", filed with the China National Intellectual Property Administration on Dec. 29, 2021, the entire disclosure of which is incorporated herein by reference.

The present application claims the priority to Chinese Patent Application No. 202123364849.1, titled "ONLINE UNCAPPING SYSTEM", filed with the China National Intellectual Property Administration on Dec. 29, 2021, the entire disclosure of which is incorporated herein by reference.

### FIELD

The present application relates to the technical field of test tube decapping devices, and in particular to an online decapping system

### BACKGROUND

Sample tubes, which are widely used in medical laboratories, need to be decapped before tests on samples in the sample tubes are conducted.

There are two decapping methods at present, namely manual decapping and online automatic decapping. The manual decapping has a low efficiency, and may cause contamination to the samples, while online decapping systems have a high efficiency, and bring no contamination. With the increase of sample quantities, laboratory automation systems are trending in laboratories, and the online decapping systems are widely used in the laboratory automation systems.

The online decapping systems cannot be directly applied to tracks conveying the sample tubes, which restricts the operation efficiency of the online decapping systems.

Therefore, a problem to be solved by those skilled in the art is how to improve the efficiency of the online decapping systems.

### SUMMARY

In view of this, an online decapping system is provided according to the present application, to improve the efficiency of the online decapping system.

To achieve the above object, following technical solutions are provided according to the present application.

An online decapping system includes a sample loading track, a scanning blocking mechanism, a sample container information scanning device, a decapping blocking mechanism, a sample tube clamping mechanism, a sample tube decapping device and a cap receiving mechanism,
the scanning blocking mechanism is arranged at a side of the sample loading track, and is configured to block or release a sample tube;
the sample container information scanning device is configured to read information of the sample tube blocked by the scanning blocking mechanism;
the decapping blocking mechanism is arranged at the side of the sample loading track, and is configured to block or release the sample tube;
the sample tube clamping mechanism is configured to clamp the sample tube blocked by the decapping blocking mechanism;
the sample tube decapping device is configured to decap the sample tube blocked by the decapping blocking mechanism such that a body and a cap of the sample tube are separated, and the sample tube decapping device is provided with a gripping claw configured for gripping the cap; and
the cap receiving mechanism is configured to collect the cap.

In an embodiment, the online decapping system further includes a cap detecting sensor, a sample unloading track and a decapping fault region, where
the cap detecting sensor is configured to detect whether the sample tube is decapped;
the sample unloading track is in communication with the sample loading track, and is configured to convey the sample tube that fails to be decapped; and
the decapping fault region is configured to receive the sample tube, conveyed by the sample unloading track, that fails to be decapped.

In an embodiment, the sample container information scanning device includes an information reading device and a rotating device, where
the information reading device is configured to read the information of the sample tube blocked by the scanning blocking mechanism; and
the rotating device is configured to rotate the sample tube blocked by the scanning blocking mechanism.

In an embodiment, the rotating device includes a base plate, a slide plate, a rotation driving device, two driving shafts and a driven wheel device, where
the base plate is arranged on the sample loading track;
the slide plate is slidable with respect to the base plate, and a sliding direction of the slide plate with respect to the base plate is perpendicular to a conveying direction of the sample loading track;
the rotation driving device is arranged on the slide plate;
the two driving shafts are rotatably arranged on the slide plate, and are parallel to each other, a driving wheel is provided at an end portion of each of the two driving shafts, and the rotation driving device is configured to drive the two driving wheels to rotate synchronously; and
the driven wheel device is arranged at a side of the sample tube away from the two driving wheels, and the two driving wheels and a driven wheel of the driven wheel device are arranged along a circumferential direction of the sample tube, and contact a sample holder configured for holding the sample tube or an outer wall of the sample tube in a case that the sample tube is rotated.

In an embodiment, the online decapping system further includes a pressing blocking mechanism and a pressing module, where
the pressing blocking mechanism is arranged at the side of the sample loading track, and is configured to block or release the sample tube; and
the pressing module is configured to press the sample tube blocked by the pressing blocking mechanism into a sample holder.

In an embodiment, the online decapping system further includes a serum quality examination module configured to analyze whether a serum of a sample in the sample tube blocked by the scanning blocking mechanism is qualified for a test after centrifugation.

In an embodiment, the serum quality examination module includes a serum quality examination frame, a light source and a camera, where
the serum quality examination frame and the rotating device of the sample container information scanning device are symmetrically arranged at two sides of the sample loading track;
the light source is arranged on the serum quality examination frame, and is configured to illuminate the sample tube rotated by the rotating device of the sample container information scanning device; and
the camera is arranged on the serum quality examination frame, and is configured to photograph the sample tube rotated by the rotating device of the sample container information scanning device.

In an embodiment, the cap receiving mechanism includes a rotation driving part and a receiving box, where
a main body of the rotation driving part is fixed at the side of the sample loading track; and
the receiving box configured for receiving the cap, and the receiving box, when driven by the rotation driving part, is configured to receive the cap removed from the sample tube by the sample tube decapping device, and discard the received cap to a cap discarding position.

In an embodiment, the receiving box includes a support plate, a receiving part and an elastic restoring member, where
the support plate is fixed with respect to the main body of the rotation driving part;
the receiving part is connected to a driving shaft of the rotation driving part, and is provided with a hole passing through an upper surface and a lower surface of the receiving part;
the support plate is configured to block a lower end face of the hole in a case that the cap is received, and avoid the lower end face of the hole in a case that the cap is discarded; and
the elastic restoring member is connected to the support plate and the receiving part, and the support plate is configured to block the lower end face of the hole in a case that the elastic restoring member is in a restored state.

In an embodiment, the sample tube clamping mechanism includes a support base, multiple mounting bases, multiple clamping claws and a driving device,
the multiple mounting bases are spaced apart and parallel to each other, and are arranged at the support base in a slidable manner;
the multiple clamping claws are arranged at the multiple mounting bases in one-to-one correspondence in a slidable manner, and an elastic member is provided between each of the clamping claws and the corresponding mounting base; and
the driving device is configured to drive each of the mounting bases to drive the corresponding clamping claw to get close to each other synchronously to clamp the sample tube, or get away from each other synchronously to release the sample tube.

In an embodiment, the sample tube decapping device includes a lifting mechanism, a gripping mechanism and a rotating mechanism, where
the gripping mechanism and the rotating mechanism are each arranged at a lifting end of the lifting mechanism through a support member;
the lifting mechanism is configured to drive the gripping mechanism and the rotating mechanism to move up and down; and
the gripping mechanism includes a first rotation driving device, a torque limiting device, a first transmission device and at least two gripping claws, where
a gripping end of each of the gripping claws is provided with a positioning structure in cooperation with the cap of the sample tube;
the first rotation driving device is connected to the gripping claws through the torque limiting device and the first transmission device in sequence;
the first transmission device is configured to convert a rotational movement of the first rotation driving device into a movement of each of the gripping claws close to or away from each other along a radial direction; and
the rotating mechanism is configured to drive the gripping claws to rotate as a whole with respect to a center axis of the gripping mechanism

With the online decapping system according to the above technical solutions of the present application, when the sample tube reaches a scanning position of the sample container information scanning device, the scanning blocking mechanism blocks the sample tube (a blocking member of the scanning blocking mechanism sticks out, for example). The sample container information scanning device reads the information of the sample tube, and the scanning blocking mechanism releases the sample tube (the blocking member of the scanning blocking mechanism retracts back, for example). When the sample tube reaches a decapping position, the decapping blocking mechanism blocks the sample tube (a blocking member of the decapping blocking mechanism sticks out, for example). The sample tube clamping mechanism clamps the sample tube, the sample tube decapping device decaps the sample tube such that the body and the cap of the sample tube are separated, and the separated cap is collected by the cap receiving mechanism. Then, the decapped sample tube (the body) is conveyed to subsequent operation systems. With the online decapping system according to the present application, the sample tube conveyed by the sample loading track is decapped online, which significantly improves the operation efficiency.

### BRIEF DESCRIPTION OF THE DRAWINGS

In order to illustrate embodiments of the present application more clearly, drawings referred to describe the embodiments will be briefly described hereinafter. Apparently, the drawings in the following description are only some examples of the present application, and for those skilled in the art, other drawings may be obtained based on these drawings without any creative efforts.
FIG. 1 is a schematic view showing the structure of an online decapping system according to the embodiments of the present application;
FIG. 2 is a schematic view showing the structure of a serum quality examination module according to the embodiments of the present application;
FIG. 3 is a first perspective view showing the structure of a rotating device according to the embodiments of the present application;
FIG. 4 is a second perspective view showing the structure of the rotating device according to the embodiments of the present application;
FIG. 5 is a front view showing the structure of the rotating device according to the embodiments of the present application;
FIG. 6 is a top view showing the structure of the rotating device according to the embodiments of the present application;

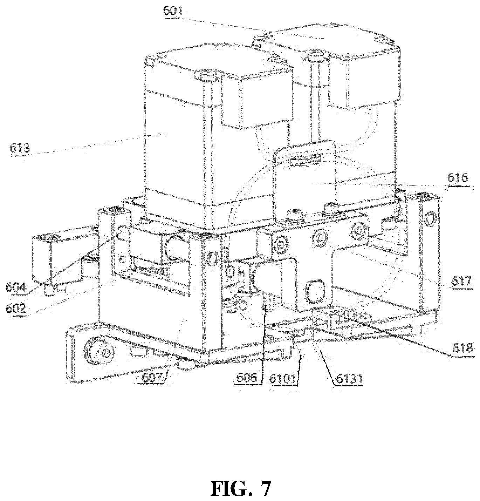

FIG. 7 is a third perspective view showing the structure of the rotating device according to the embodiments of the present application

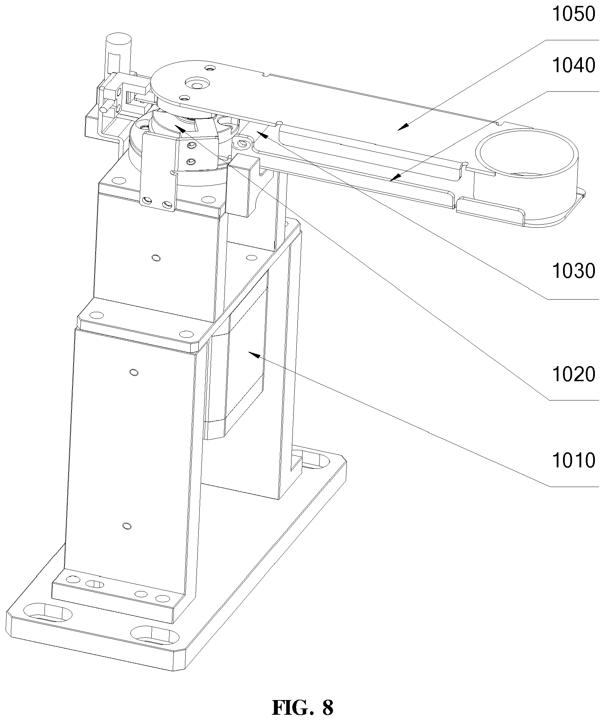

FIG. 8 is a schematic view showing the structure of a cap receiving mechanism according to the embodiments of the present application;
FIG. 9 is a schematic view showing the structure of a sample tube clamping mechanism according to the embodiments of the present application from a perspective;
FIG. 10 is a schematic view showing the structure of the sample tube clamping mechanism according to the embodiments of the present application from another perspective;

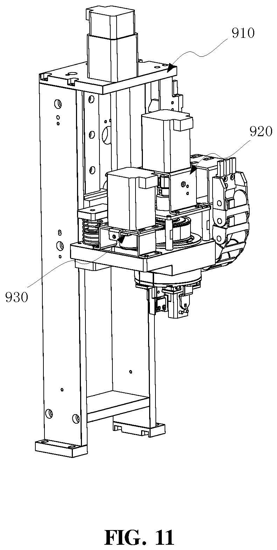

FIG. 11 is a schematic view showing the structure of a sample tube decapping device according to the embodiments of the present application;

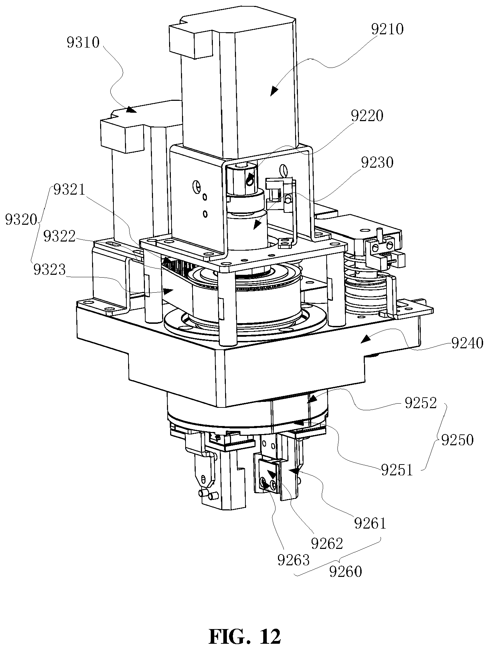

FIG. 12 is a schematic view showing the structures of a gripping mechanism and a rotating mechanism of the sample tube decapping device according to the embodiments of the present application;

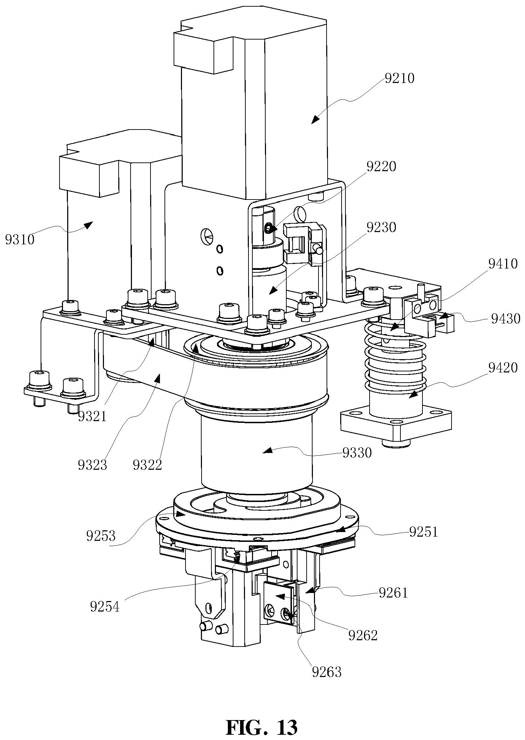

FIG. 13 is a schematic view showing a part of the structures of the gripping mechanism and the rotating mechanism of the sample tube decapping device according to the embodiments of the present application; and

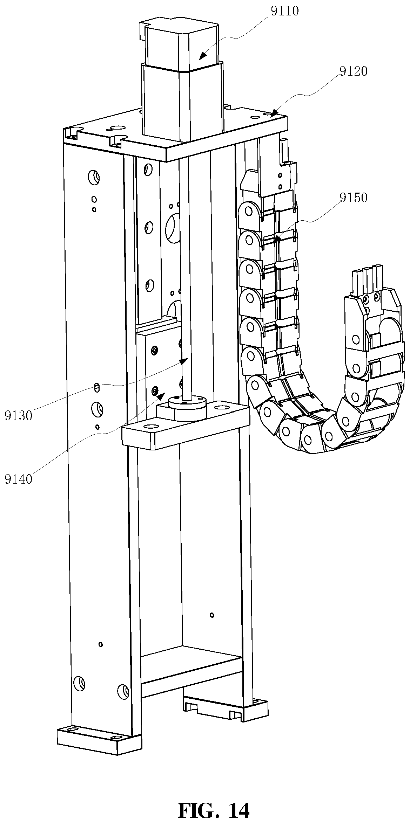

FIG. 14 is a schematic view showing the structure of a lifting mechanism of the sample tube decapping device according to the embodiments of the present application.

### DETAILED DESCRIPTION OF THE EMBODIMENTS

An online decapping system is provided according to the present application, to improve the efficiency of the online decapping system.

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

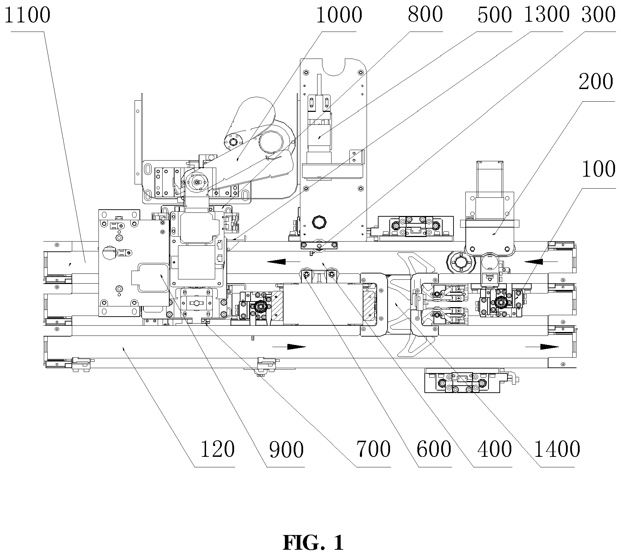

As shown in FIG. 1, an online decapping system includes a sample loading track 1100, a scanning blocking mechanism 300, a sample container information scanning device, a decapping blocking mechanism 700, a sample tube clamping mechanism 800, a sample tube decapping device 900 and a cap receiving mechanism 1000. The scanning blocking mechanism 300 is arranged at a side of the sample loading track 1100, and is configured to block or release a sample tube. The sample container information scanning device is configured to read information of the sample tube blocked by the scanning blocking mechanism 300. The decapping blocking mechanism 700 is arranged at the side of the sample loading track 1100, and is configured to block or release the sample tube. The sample tube clamping mechanism 800 is configured to clamp the sample tube blocked by the decapping blocking mechanism 700. The sample tube decapping device 900 is configured to decap the sample tube blocked by the decapping blocking mechanism 700 such that a body and a cap of the sample tube are separated. The cap receiving mechanism 1000 is configured to collect the cap.

With the online decapping system according to the embodiments of the present application, when the sample tube reaches a scanning position of the sample container information scanning device, the scanning blocking mechanism 300 blocks the sample tube A (a blocking member of the scanning blocking mechanism 300 sticks out, for example). The sample container information scanning device reads the information of the sample tube, and the scanning blocking mechanism 300 releases the sample tube A (the blocking member of the scanning blocking mechanism 300 retracts back, for example). When the sample tube reaches a decapping position, the decapping blocking mechanism 700 blocks the sample tube A (a blocking member of the decapping blocking mechanism 700 sticks out, for example). The sample tube clamping mechanism 800 clamps the sample tube, the sample tube decapping device 900 decaps the sample tube such that the body and the cap of the sample tube are separated, and the separated cap is collected by the cap receiving mechanism 1000. Then, the decapped sample tube (the body) is conveyed to subsequent operation systems. With the online decapping system according to the present application, the sample tube conveyed by the sample loading track 1100 is decapped online, which significantly improves the operation efficiency.

In the present embodiment, the sample tube decapping device 900 is provided with a gripping claw for gripping the cap. The gripping claw grips the cap and moves away from the sample tube clamping mechanism 800, whereby the body and the cap are separated. The gripping claw releases the cap, and the cap falls into a receiving box of the cap receiving mechanism 1000.

A pressing blocking mechanism 100, the scanning blocking mechanism 300 and the decapping blocking mechanism 700 are arranged in sequence along a direction in which the sample loading track 1100 conveys the sample tube A.

Further, the online decapping system includes a cap detecting sensor 1300, a sample unloading track 120 and a decapping fault region 1400. The cap detecting sensor 1300 is configured to detect whether the sample tube is decapped. The sample unloading track 120 is in communication with the sample loading track 1100, and is configured to convey the sample tube that fails to be decapped. The decapping fault region 1400 is configured to receive the sample tube, conveyed by the sample unloading track 120, that fails to be decapped. With the cap detecting sensor 1300, the sample unloading track 120 and the decapping fault region 1400, in a case that the sample tube fails to be decapped, the cap detecting sensor 1300 conveys the sample tube to the decapping fault region 1400 through the sample unloading track 120. The sample tube that fails to be decapped in the decapping fault region 1400 is decapped manually. It may be appreciated that, the sample tube conveyed by the sample loading track 1100 reaches the cap detecting sensor 1300 after passing through the sample tube decapping device 900.

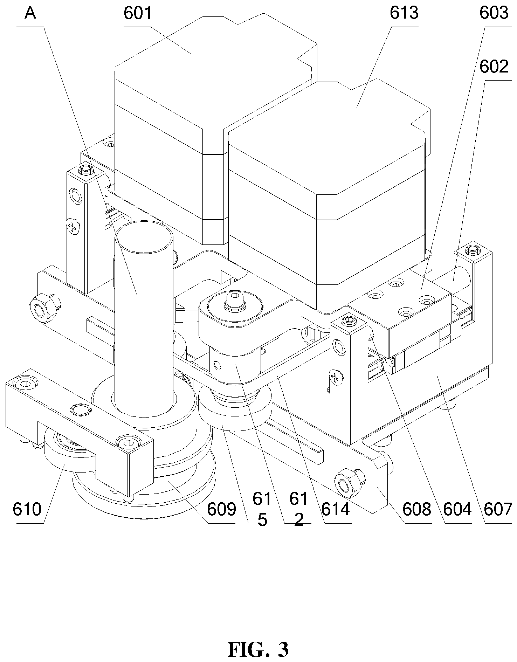

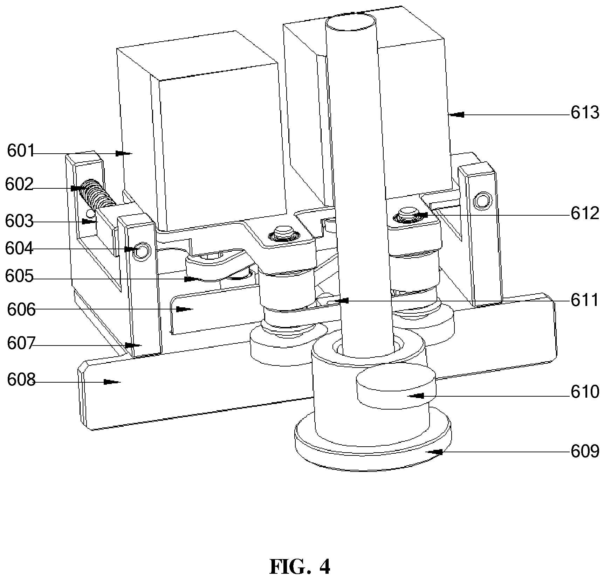

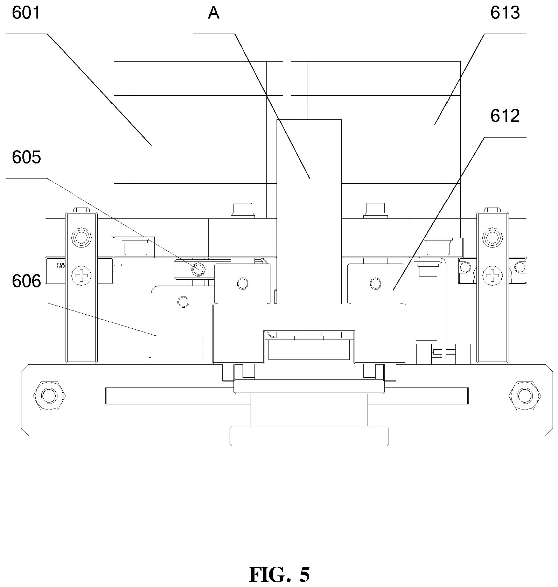

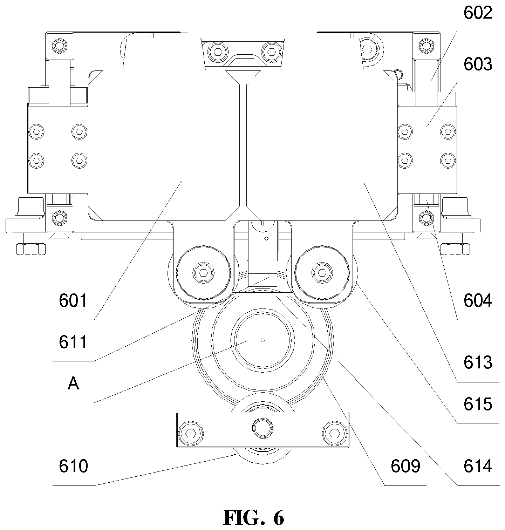

As shown in FIGS. 3 to 6, the rotating device 600 includes a base plate 608, a slide plate 603, a rotation driving device 613, two driving shafts 612, a driven wheel device 610 and an elastic member 602. The base plate 608 is arranged on the sample loading track. The slide plate 603 is slidable with respect to the base plate 608, and a sliding direction of the slide plate 603 with respect to the base plate 608 is perpendicular to a conveying direction of the sample loading track. The rotation driving device 613 is arranged on the slide plate 603. The two driving shafts 612 are rotatably arranged on the slide plate 603, and are parallel to each other. A driving wheel 615 is provided at an end portion of each of the two driving shafts 612, and the rotation driving device 613 drives the two driving wheels 615 to rotate synchronously. The driven wheel device 610 is arranged at a side of the sample tube A away from the two driving wheels 615, and the two driving wheels 615 and a driven wheel of the driven wheel device 610 are arranged along a circumferential direction of the sample tube A, and contact a sample holder 609 holding the sample tube A or an outer wall of the sample tube A in a case that the sample tube A is rotated.

To further improve a degree of automation, the online decapping system according to the embodiments of the present application further includes a pressing blocking mechanism 100 and a pressing module 200. The pressing blocking mechanism 100 is arranged at the side of the sample loading track 1100, and is configured to block or release the sample tube. The pressing module 200 is configured to press the sample tube blocked by the pressing blocking mechanism 100 into a sample holder. When the sample tube A is conveyed to a pressing position by the sample loading track 1100, the pressing blocking mechanism 100 blocks the sample tube A (a blocking member of the pressing blocking mechanism 100 sticks out, for example). The pressing module 200 presses the sample tube into the sample holder, and the pressing blocking mechanism 100 releases the sample tube A (the blocking member of the pressing blocking mechanism 100 retracts back, for example).

To ensure a qualified sample tube to reach a decapping position, the online decapping system further includes a serum quality examination module 500 to analyze whether a serum of a sample in the sample tube A blocked by the scanning blocking mechanism 300 is qualified for a test after centrifugation. The scanning blocking mechanism 300 blocks the sample tube A (a blocking member of the scanning blocking mechanism 300 sticks out, for example), and the sample container information scanning device reads the information of the sample tube. The serum quality examination module 500 analyzes whether the serum of the sample in the sample tube is qualified for a test after centrifugation. The scanning blocking mechanism 300 releases the qualified sample tube A.

Further, if the sample in the sample tube is unqualified for a test after centrifugation according to the serum quality examination module 500, the subsequent components following the serum quality examination module 500 (such as the decapping blocking mechanism 700, the sample tube clamping mechanism 800 and the sample tube decapping device 900) directly release the sample tube, and the sample tube directly goes back to a previous system (a centrifuge system) through the sample unloading track 120 for recentrifugation. After recentrifugation, the sample tube is processed by the online decapping system according to the embodiments of the present application again.

In the present embodiment, the sample unloading track 120 is arranged parallel to the sample loading track 1100, and may form an H-shaped track with the sample loading track 1100. An intermediate connection track is provided between the sample unloading track 120 and the sample loading track 1100 for conveying the sample tube from the sample loading track 1100 to the sample unloading track 120. If the sample tube fails to be decapped according to the detection by the cap detecting sensor 1300, the sample tube is conveyed from the sample loading track 1100 to the sample unloading track 120 through the intermediate connection track and is conveyed to the decapping fault region 1400 through the sample unloading track 120. Alternatively, a pushing part or a pulling part is provided between the sample unloading track 120 and the sample loading track 1100 for transferring the sample tube on the sample loading track 1100 to the sample unloading track 120.

In the present embodiment, the sample container information scanning device includes an information reading device 400 and a rotating device 600. The information reading device 400 is configured to read the information of the sample tube blocked by the scanning blocking mechanism 300. The rotating device is configured to rotate the sample tube blocked by blocking mechanism 300.

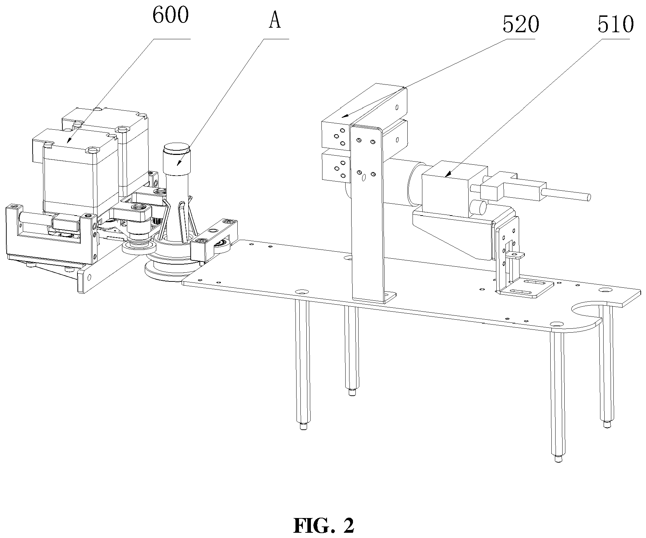

As shown in FIG. 2, the serum quality examination module 500 includes a serum quality examination frame, a light source 520 and a camera 510. The serum quality examination frame and the rotating device 600 are symmetrically arranged at two sides of the sample loading track 1100. The light source 520 is arranged, and is configured to illuminate the sample tube A rotated by the rotating device 600. The camera 510 is arranged on the serum quality examination frame, and is configured to photograph the sample tube A rotated by the rotating device 600.

The cap receiving mechanism 1000 includes a rotation driving part 1010 and a receiving box configured for receiving the cap. A main body of the rotation driving part 1010 is fixed at the side of the sample loading track 1100. The receiving box, when driven by the rotation driving part 1010, is configured to receive the cap removed from the sample tube A by the sample tube decapping device 900, and discard the received cap to a cap discarding position.

The receiving box rotates to the decapping position when driven by the rotation driving part 1010, and the cap gripped by the sample tube decapping device 900 falls into the receiving box. The receiving box rotates back to the cap discarding position and discards the cap into a collecting bin. After decapping, the cap detecting sensor 1300 determines whether the cap of the sample tube is removed.

The receiving box includes a support plate 1040, a receiving part 1050 and an elastic restoring member 1030. The support plate 1040 is fixed with respect to the main body of the rotation driving part 1010. The receiving part 1050 is connected to a driving shaft 1020 of the rotation driving part 1010, and is provided with a hole passing through an upper surface and a lower surface of the receiving part 1050. The support plate 1040 blocks a lower end face of the hole in a case that the cap is received, and avoids the lower end face of the hole in a case that the cap is discarded. The elastic restoring member 1030 is connected to the support plate 1040 and the receiving part 1050, and the support plate 1040 blocks the lower end face of the hole in a case that the elastic restoring member 1030 is in a restored state.

In the present embodiment, the elastic restoring member 1030 is a tension spring. One end of the tension spring is connected to the support plate 1040, and the other end of the tension spring is connected to the receiving part 1050.

Further, a collecting bin is provided at the cap discarding position, and the cap is discarded into the collecting bin.

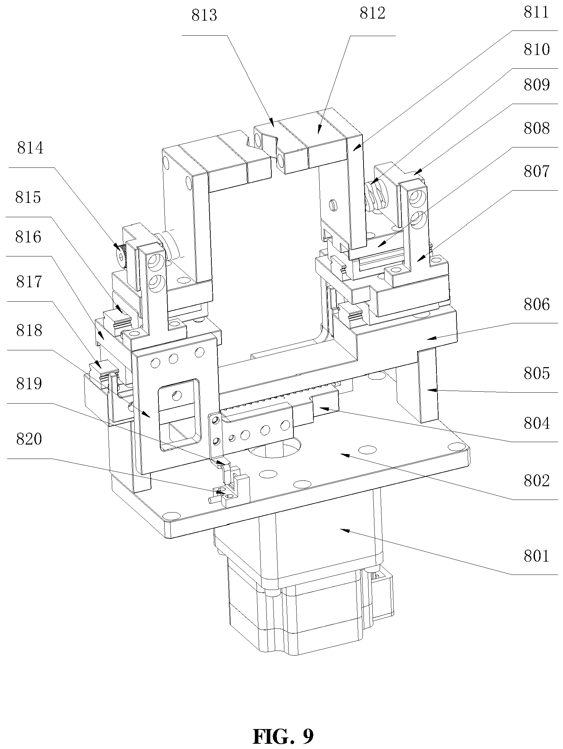

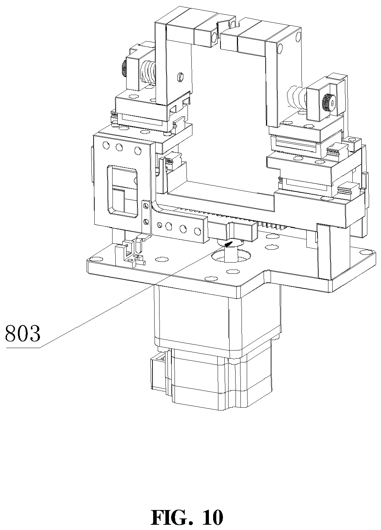

Referring to FIGS. 9 and 10, FIG. 9 is a schematic view showing the structure of the sample tube clamping mechanism 800 according to the embodiments of the present application from a perspective, and FIG. 10 is a schematic view showing the structure of the sample tube clamping mechanism 800 according to the embodiments of the present application from another perspective.

The sample tube clamping mechanism 800 provided according to the embodiments of the present application includes a support base 806, multiple mounting bases 816, multiple clamping claws and a driving device.

The multiple mounting bases 816 are spaced apart and parallel to each other, and are arranged at the support base 806 in a slidable manner. The multiple clamping claws form a clamping device for clamping the sample tube, and are arranged at the multiple mounting bases 816 in one-to-one correspondence in a slidable manner. An elastic member 810 is provided between each of the clamping claws and the corresponding mounting base 816. The driving device is configured to drive each of the mounting bases 816 to drive the corresponding clamping claw to get close to each other synchronously to clamp the sample tube, or get away from each other synchronously to release the sample tube.

The sample tube decapping device provided by the embodiments of the present application includes a lifting mechanism 910, a gripping mechanism 920 and a rotating mechanism 930.

The gripping mechanism 920 and the rotating mechanism 930 are each arranged at a lifting end of the lifting mechanism 910 through a support member 9240. The lifting mechanism 910 is configured to drive the gripping mechanism 920 and the rotating mechanism 930 to move up and down. The gripping mechanism 920 includes a first rotation driving device 9210, a torque limiting device 9230, a first transmission device 9250 and at least two gripping claws 9260, and a gripping end of each of the gripping claws 9260 is provided with a positioning structure in cooperation with the cap of the sample tube to prevent the cap from slipping with respect to each of the gripping claws 9260. The first rotation driving device 9210 is connected to the gripping claws 9260 through the torque limiting device 9230 and the first transmission device 9250 in sequence. The first transmission device 9250 is configured to convert a rotational movement of the first rotation driving device 9210 into a movement of each of the gripping claws 9260 close to or away from each other along a radial direction, and the rotating mechanism is configured to drive the gripping claws to rotate as a whole with respect to a center axis of the gripping mechanism.

It can be seen that, compared to the prior art, with the sample tube decapping device according to the embodiments of the present application, the lifting mechanism 910 drives the gripping mechanism 920 and the rotating mechanism 930 to move downwards, such that the gripping mechanism 920 and the rotating mechanism 930 reaches a position to grip the cap of the sample tube. Then the gripping mechanism 920 is operated. The first rotation driving device 9210 drives the gripping claws 9260 to get close to each other along the radial direction through the torque limiting device 9230 and the first transmission device 9250. When an interaction force between the gripping claws 9260 and the cap is larger than a preset torque of the torque limiting device 9230, the torque limiting device 9230 slips to disconnect the first rotation driving device 9210 and the first transmission device 9250. In this way, the sample tube decapping device can grip sample tube caps with different diameters under a same gripping force, which is compatible for sample tubes of various sizes, and is easy to use. After the cap is gripped, the rotating mechanism 930 drives the whole gripping mechanism 920 to rotate, and the lifting mechanism 910 drives the rotating mechanism 930 and the gripping mechanism 920 to move upwards, such that the cap is rotated and moves upwards with respect to the body of the sample tube to be separated from the body, thereby completing the decapping.

The above embodiments in this specification are described in a progressive manner. Each of the embodiments is mainly focused on describing its differences from other embodiments, and references may be made among these embodiments with respect to the same or similar portions among these embodiments.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. An online decapping system, comprising a sample loading track, a scanning blocking mechanism, a sample container information scanning device, a decapping blocking mechanism, a sample tube clamping mechanism, a sample tube decapping device and a cap receiving mechanism, wherein
the scanning blocking mechanism is arranged at a side of the sample loading track, and is configured to block or release a sample tube;
the sample container information scanning device is configured to read information of the sample tube blocked by the scanning blocking mechanism;
the decapping blocking mechanism is arranged at the side of the sample loading track, and is configured to block or release the sample tube;
the sample tube clamping mechanism is configured to clamp the sample tube blocked by the decapping blocking mechanism;
the sample tube decapping device is configured to decap the sample tube blocked by the decapping blocking mechanism such that a body and a cap of the sample tube are separated, and the sample tube decapping device is provided with a gripping claw configured for gripping the cap; and
the cap receiving mechanism is configured to collect the cap.

2. The online decapping system according to claim 1, comprising a cap detecting sensor, a sample unloading track and a decapping fault region, wherein
the cap detecting sensor is configured to detect whether the sample tube is decapped;
the sample unloading track is in communication with the sample loading track, and is configured to convey the sample tube that fails to be decapped; and
the decapping fault region is configured to receive the sample tube, conveyed by the sample unloading track, that fails to be decapped.

3. The online decapping system according to claim 1, wherein the sample container information scanning device comprises an information reading device and a rotating device, wherein
the information reading device is configured to read the information of the sample tube blocked by the scanning blocking mechanism; and
the rotating device is configured to rotate the sample tube blocked by the scanning blocking mechanism.

4. The online decapping system according to claim 3, wherein the rotating device comprises a base plate, a slide plate, a rotation driving device, two driving shafts and a driven wheel device, wherein
the base plate is arranged on the sample loading track;
the slide plate is slidable with respect to the base plate, and a sliding direction of the slide plate with respect to the base plate is perpendicular to a conveying direction of the sample loading track;
the rotation driving device is arranged on the slide plate;
the two driving shafts are rotatably arranged on the slide plate, and are parallel to each other, a driving wheel is provided at an end portion of each of the two driving shafts, and the rotation driving device is configured to drive the two driving wheels to rotate synchronously; and
the driven wheel device is arranged at a side of the sample tube away from the two driving wheels, and the two driving wheels and a driven wheel of the driven wheel device are arranged along a circumferential direction of the sample tube, and contact a sample holder configured for holding the sample tube or an outer wall of the sample tube in a case that the sample tube is rotated.

5. The online decapping system according to claim 1, comprising a pressing blocking mechanism and a pressing module, wherein
the pressing blocking mechanism is arranged at the side of the sample loading track, and is configured to block or release the sample tube; and
the pressing module is configured to press the sample tube blocked by the pressing blocking mechanism into a sample holder.

6. The online decapping system according to any one of claims 1 to 5, comprising a serum quality examination module configured to analyze whether a serum of a sample in the sample tube blocked by the scanning blocking mechanism is qualified for a test after centrifugation.

7. The online decapping system according to claim 6, wherein the serum quality examination module comprises a serum quality examination frame, a light source and a camera, wherein
the serum quality examination frame and the rotating device of the sample container information scanning device are symmetrically arranged at two sides of the sample loading track;
the light source is arranged on the serum quality examination frame, and is configured to illuminate the sample tube rotated by the rotating device of the sample container information scanning device; and
the camera is arranged on the serum quality examination frame, and is configured to photograph the sample tube rotated by the rotating device of the sample container information scanning device.

8. The online decapping system according to claim 1, wherein the cap receiving mechanism comprises a rotation driving part and a receiving box, wherein
a main body of the rotation driving part is fixed at the side of the sample loading track; and
the receiving box configured for receiving the cap, and the receiving box, when driven by the rotation driving part, is configured to receive the cap removed from the sample tube by the sample tube decapping device, and discard the received cap to a cap discarding position.

9. The online decapping system according to claim 8, wherein the receiving box comprises a support plate, a receiving part and an elastic restoring member, wherein
the support plate is fixed with respect to the main body of the rotation driving part;
the receiving part is connected to a driving shaft of the rotation driving part, and is provided with a hole passing through an upper surface and a lower surface of the receiving part;
the support plate is configured to block a lower end face of the hole in a case that the cap is received, and avoid the lower end face of the hole in a case that the cap is discarded; and
the elastic restoring member is connected to the support plate and the receiving part, and the support plate is configured to block the lower end face of the hole in a case that the elastic restoring member is in a restored state.

10. The online decapping system according to claim 1, wherein the sample tube clamping mechanism comprises a support base, a plurality of mounting bases, a plurality of clamping claws and a driving device, wherein
the plurality of mounting bases are spaced apart and parallel to each other, and are arranged at the support base in a slidable manner;
the plurality of clamping claws are arranged at the plurality of mounting bases in one-to-one correspondence in a slidable manner, and an elastic member is provided between each of the clamping claws and the corresponding mounting base; and
the driving device is configured to drive each of the mounting bases to drive the corresponding clamping claw to get close to each other synchronously to clamp the sample tube, or get away from each other synchronously to release the sample tube.

11. The online decapping system according to claim 1, wherein the sample tube decapping device comprises a lifting mechanism, a gripping mechanism and a rotating mechanism, wherein
the gripping mechanism and the rotating mechanism are each arranged at a lifting end of the lifting mechanism through a support member;
the lifting mechanism is configured to drive the gripping mechanism and the rotating mechanism to move up and down; and
the gripping mechanism comprises a first rotation driving device, a torque limiting device, a first transmission device and at least two gripping claws, wherein
a gripping end of each of the gripping claws is provided with a positioning structure in cooperation with the cap of the sample tube;
the first rotation driving device is connected to the gripping claws through the torque limiting device and the first transmission device in sequence;
the first transmission device is configured to convert a rotational movement of the first rotation driving device into a movement of each of the gripping claws close to or away from each other along a radial direction; and
the rotating mechanism is configured to drive the gripping claws to rotate as a whole with respect to a center axis of the gripping mechanism
